# EUROPÄISCHE PATENTANMELDUNG

(11) **EP 0 891 120 A2**
(43) Veröffentlichungstag der Anmeldung: **13.01.1999**
(21) Anmeldenummer: 98111508.2
(22) Anmeldetag: 23.06.1998
(51) Int. Cl.: H05B 33/08

(54) **Schaltungseinrichtung zum Schutz von strombetriebenen Leuchtmittein, insbesondere von LEDs, zu Signal- oder Beleuchtungszwecken**

(30) Priorität: 07.07.1997 DE 19728763
(71) Anmelder: REITTER & SCHEFENACKER GmbH & Co. KG, D-73730 Esslingen (DE)
(72) Erfinder: Robel, Wolfgang, 70794 Filderstadt-Sielmingen (DE); Weiss, Achim, 75038 Oberderdingen (DE); Haf, Helmut, 71409 Schwaikheim (DE); Gauch, Winfried Hardy, 71106 Magstadt (DE); Eberspächer, Helmut, 73732 Esslingen (DE)
(74) Vertreter: Jackisch-Kohl, Anna-Katharina

(57) **Zusammenfassung**

LED's werden häufig in Heckleuchten eingesetzt. Sie können bei positiven oder negativen Spannungsspitzen leicht beschädigt werden. Damit die Schaltungseinrichtung gegen positive Überspannungen sicher ist und den Strom zum Leuchtmittel auf ein ungefährliches Maß begrenzt, ist dem Leuchtmittel (4) ein PTC-Widerstand (5) vorgeschaltet. Fließt durch den PTC-Widerstand (5) ein Strom, der größer ist als der Nennstrom, so erwärmt sich der Widerstand (5) stark. Dadurch steigt sein Widerstandswert rasch an, wodurch der Strom begrenzt wird. Das nachfolgende Leuchtmittel (4) ist dadurch gegen zu hohen Strom sowie gegen positive Überspannungen gesichert.

## Beschreibung

Die Erfindung betrifft eine Schaltungseinrichtung zum Schutz von strombetriebenen Leuchtmitteln, insbesondere von LEDs, zu Signal-oder Beleuchtungszwecken nach dem Oberbegriff des Anspruches 1 bzw. 7 bzw. 12.

Strombetriebene Leuchtmittel, insbesondere in Form von LEDs, werden in der Kraftfahrzeugtechnik häufig eingesetzt, vorzugsweise in den Heckleuchten. Die LEDs sind empfindliche Halbleiter-Leuchtelemente, die bei positiven oder negativen Spannungsspitzen leicht beschädigt werden können. Solche Spannungsspitzen können zum Beispiel bei der Verpolung der Versorungsspannung oder bei der Lastabschaltung induktiver Verbraucher entstehen. Es ist bekannt, zur Unterdrückung von Hochspannungsnegativimpulsen Dioden zu verwenden, denen Widerstände zur Strombegrenzung nachgeschaltet sind. Mit solchen Schaltungseinrichtungen ist jedoch eine Regelung nicht möglich; vielmehr ist der Stromdurchgang von der Versorgungsspannung abhängig. Darüber hinaus sind solche Schaltungseinrichtungen nicht sicher gegen positive Überspannungen.

Der Erfindung liegt die Aufgabe zugrunde, die gattungsgemäße Schaltungseinrichtung so auszubilden, daß sie sicher gegen positive Überspannungen ist und den Strom zum Leuchtmittel auf ein ungefährliches Maß begrenzt.

Diese Aufgabe wird bei der gattungsgemäßen Schaltungseinrichtung erfindungsgemäß mit den kennzeichnenden Merkmalen des Anspruches 1 bzw. 7 bzw. 12 gelöst.

Bei der erfindungsgemäßen Schaltungseinrichtung nach Anspruch 1 schützt der PTC-Widerstand das Leuchtmittel vor einer positiven Überspannung. Fließt durch den PTC-Widerstand ein Strom, der größer ist als der Nennstrom, so erwärmt sich der PTC-Widerstand stark. Dadurch steigt sein Widerstandswert jedoch rasch an, wodurch der Strom begrenzt wird. Auf diese Weise ist das nachfolgende Leuchtmittel sicher gegen zu hohen Strom sowie gegen positive Überspannungen gesichert.

Bei der Ausführung nach Anspruch 7 wird der Stromdurchgang durch die selbstregelnde Stromquelle auf einen für das nachfolgende Leuchtmittel ungefährlichen Wert begrenzt. Vorteilhaft weist die selbstregelnde Stromquelle einen Feldeffekttransistor auf, bei dem die Höhe des Stromdurchganges abhängig ist vom Potential zwischen Gate und Source des Feldeffekttransistors. Dadurch fließt ein konstanter Strom durch das Leuchtmittel, unabhängig von der Höhe der Versorgungsspannung.

Der Abwärtswandler nach Anspruch 12 verhindert eine Beschädigung oder Zerstörung der Leuchtmittel bei zu hoher Last und/oder zu hoher Temperatur. In solchen Fällen wird der Abwärtswandler abgeschaltet.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: eine Schaltungseinrichtung nach dem Stand der Technik,
- Fig. 2 Bis Fig. 7: verschiedene Ausführungsformen von erfindungsgemäßen Schalteinrichtungen,
- Fig. 8: eine Temperatur-Strom-Kennlinie der Schalteinrichtung gemäß Fig. 7,
- Fig. 9: eine weitere Ausführungsform einer erfindungsgemäßen Schalteinrichtung.

Die Schalteinrichtungen dienen als Schutzschaltungen, um strombetriebene Leuchtmittel im Automotive-Bereich zu schützen. Solche Leuchtmittel werden zu Signal- oder Beleuchtungszwecken eingesetzt und sind vorzugsweise LEDs. Die Schalteinrichtungen haben den Zweck, die empfindlichen Halbleiter-Leuchtmittel vor positiven oder negativen Spannungsspitzen zu schützen. Außerdem begrenzen sie den Versorgungsstrom bei Überspannung und/oder Übertemperatur auf ein für das Leuchtmittel ungefährliches Maß.

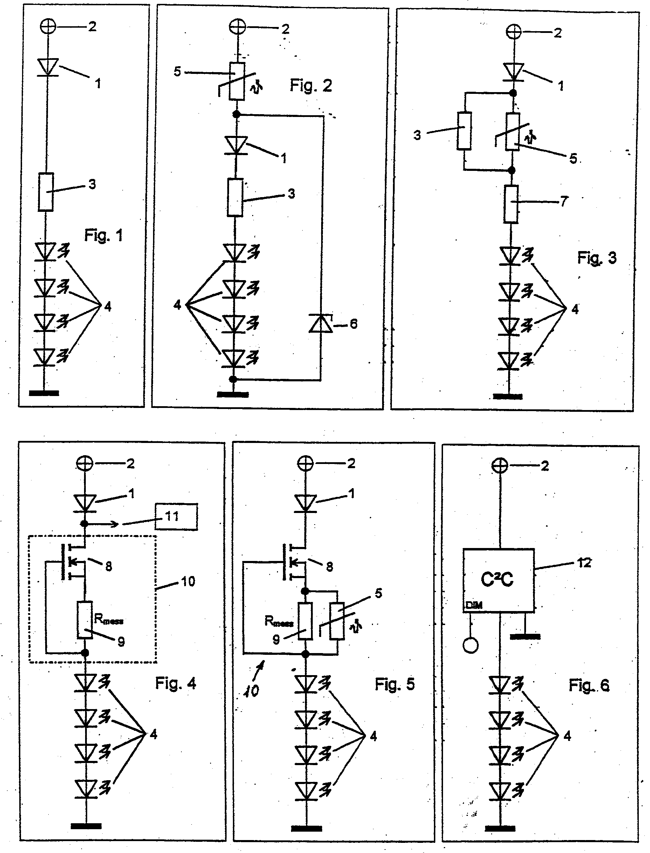

Fig. 1 zeigt eine herkömmliche Schalteinrichtung mit einer Diode 1, die an ein Versorgungsplus 2 angeschlossen ist. Die Diode 1 unterdrückt negative Hochspannungsimpulse. Die Versorgungsspannung liegt im Ausführungsbeispiel zwischen 9 und 16 Volt. Sie kann je nach Anwendungsfall selbstverständlich auch andere Spannungswerte haben. Der Diode 1 ist ein Widerstand 3 nachgeschaltet, mit dem die Stromeinstellung im Arbeitspunkt vorgenommen wird.

In Reihe zum Widerstand 3 sind im Ausführungsbeispiel vier Leuchtmittel 4 vorgesehen, die jeweils als LEDs ausgebildet sind.

Die Diode 1 schützt die Leuchtmittel 4 vor negativen Spannungen bis etwa 400 Volt, wie sie beispielsweise bei einer Verpolung der Versorgungsspannung oder bei Spannungsspitzen bei Lastabschaltung induktiver Verbraucher auftreten. Aufgrund des Vorwiderstandes 3 ist eine Regelung des Stromes zu den Leuchtmitteln 4 nicht möglich. Außerdem sichert die Diode 1 nicht gegen positive Überspannungen.

Die Schalteinrichtung nach Fig. 2 beseitigt die beschriebenen Nachteile. Zwischen dem Versorgungsplus 2 und der Diode 1 befindet sich ein PTC-Widerstand 5, dessen Widerstandswert mit zunehmender Temperatur steigt. Als PTC-Widerstand 5 kann ein ''Polyswitch'' oder ''Multifuse'' eingesetzt werden. Parallel zum Widerstand 1 und den als LEDs ausgebildeten Leuchtmitteln 4 liegt eine Zenerdiode 6, die zusammen mit dem PTC-Widerstand 5 die Leuchtmittel 4 vor einer positiven Überspannung schützt. Fließt durch den PTC-Widerstand 5 ein Strom, der größer ist als der spezifizierte Nennstrom, so erwärmt sich der Widerstand sehr stark, so daß der Widerstandswert entsprechend der steilen Kennlinie rasch ansteigt. Dadurch wird der Strom begrenzt, so daß die Leuchtmittel 4 geschützt sind. Nach der Abkühlung des PTC-Widerstandes 5 verhält sich die Schalteinrichtung wie zuvor. Der PTC-Widerstand 5 kann als selbstrücksetzende Sicherung angesehen werden. Die Zenerdiode 6, die ab ihrer spezifizierten Zenerspannung in Sperrichtung leitend wird, verkürzt die Ansprechzeit des PTC-Widerstandes 5 durch zusätzlichen Stromfluß für den Fall, daß die Betriebsspannung die Zenerspannung überschreitet. Die Zenerspannung beträgt im dargestellten Ausführungsbeispiel 16 Volt.

Abweichend vom dargestellten Ausführungsbeispiel kann die Zenerdiode 6 auch entfallen. Dann fließt bei ansteigendem Strom zunächst der hohe Strom kurzzeitig durch die Leuchtmittel 4, bis der PTC-Widerstand 5 anspricht und sein Widerstandswert zunimmt, wodurch der Strom begrenzt wird.

Während beim Ausführungsbeispiel nach Fig. 2 ein Überspannungsschutz vorliegt, dient die Schalteinrichtung nach Fig. 3 als Übertem peraturschutz. Dem Versorgungsplus 2 ist die Diode 1 nachgeschaltet. In Reihe zu ihr liegt der PTC-Widerstand 5, der seinerseits in Reihe zu einem Widerstand 7 liegt. Er bestimmt den maximalen Strom im kalten Betriebsfall, bei dem der PTC-Widerstand 5 vernachlässigbar niederohmig ist. Parallel zum PTC-Widerstand 5 liegt der strombegrenzende Widerstand 3, der bei Übertemperatur den Strom durch die als LEDs ausgebildeten Leuchtmittel 4 auf ein unschädliches Maß regelt.

Die Summe der Widerstände 3 und 7 bestimmt den minimalen Strom im Falle hoher Betriebstemperaturen. Der PTC-Widerstand 5 ist in diesem Falle vernachlässigbar hochohmig, d.h. der Strom fließt im wesentlichen nur durch die Widerstände 3 und 7 zu den Leuchtmitteln 4. Wenn die Betriebstemperatur steigt, wandert der Arbeitspunkt dieser Schalteinrichtung zu höheren Strömen. Der PTC-Widerstand 5 erhöht bei zunehmenden Temperaturen seinen Widerstandswert und begrenzt dadurch den Strom. Die Leuchtmittel 4 werden nur mit dem zulässigen Maximalstrom in Abhängigkeit von der Temperatur betrieben. Zwischen dem kalten Betriebsfall und dem Fall hoher Betriebstemperaturen findet somit eine gleitende Stromregelung statt, die bei konstanter Versorgungsspannung von der Temperatur des PTC-Widerstandes 5 abhängig ist.

Die Schalteinrichtung nach Fig. 4 kann als selbstregelnde Stromquelle angesehen werden. Dem Versorgungsplus 2 ist die Diode 1 nachgeschaltet. In Reihe zu ihr liegt ein MOSFET 8, dem ein Meßwiderstand 9 nachgeschaltet ist. Er mißt den Nennstrom unabhängig von der Versorgungsspannung und steuert damit den Feldeffekttransistor 8 auf konstanten Stromdurchlaß bei variabler Versorgungsspannung. Der Feldeffekttransistor 8 und der Meßwiderstand 9 bilden eine einfache, selbstregelnde, potentialfreie MOSFET-Stromquelle 10 mit dem selbstleitenden Verarmungs-MOSFET 8. Der Strom durch den Feldeffekttransistor 8 ist abhängig vom Potential zwischen seinem Gate und Source. Unabhängig von der Versorgungsspannung fließt durch die Leuchtmittel 4 stets ein konstanter Strom. Pfeil 11 soll darauf hinweisen, daß diese Schaltungseinrichtung kaskadierbar ist. Auch die übrigen Ausführungsformen sind kaskadierbar.

Die Schaltungseinrichtung nach Fig. 5 weist die gleichen Funktionen wie die Schaltungseinrichtung nach Fig. 4 auf. Zusätzlich zur MOS-FET-Stromquelle 10 ist der PTC-Widerstand 5 parallel oder in Reihe zum Meßwiderstand 9 vorgesehen. Im übrigen ist die Schaltungseinrichtung nach Fig. 5 gleich ausgebildet wie das Ausführungsbeispiel nach Fig. 4. Während bei der Ausführungsform nach Fig. 3 der Feldeffekttransistor 8 temperaturabhangig ist, d.h. seine Kennlinie sich bei höheren Temperaturen zu höheren Strömen verschiebt, sorgt der PTC-Widerstand bei der Ausführungsform nach Fig. 5 dafür, daß beim Verschieben der Kennlinie des Feldeffekttransistors 8 der Strom auf konstantem Wert bleibt. Der PCT-Widerstand 5 sorgt somit bei Temperaturerhöhung für eine Stromreduzierung. Dadurch wird zuverlässig verhindert, daß die Leuchtmittel 4, die vorzugsweise LEDs sind, bei hohen Temperaturen durch unzulässig hohen Betriebsstrom geschädigt oder zerstört werden.

Der PTC-Widerstand 5 kann auch entsprechend der Schaltungseinrichtung nach Fig. 3 den geregelten Strom bei hohen Temperaturen auf einen niedrigeren Wert regeln.

Die Schaltungseinrichtung nach Fig. 6 weist die gleichen Funktionen wie die Schaltungseinrichtung nach Fig. 5 auf. Zusätzlich ist diese Schaltungseinrichtung jedoch mit einer Temperaturkompensation (Bauteildriftkompensation) und/oder einer thermisch abhängigen Stromkennlinie und/oder einer externen Steuermöglichkeit des Nennstromes (Dimmfunktion) durch Steuerspannung oder Steuerstrom versehen. Alle diese Möglichkeiten sind in einen IC-Bauteil 12 integriert. Auch die Schaltungsmöglichkeiten gemäß Fig. 5 sind im IC-Baustein 12 enthalten. Er liegt zwischen dem Versorgungsplus 2 und den als LEDs ausgebildeten Leuchtmitteln 4. Der IC-Bauteil 12 bietet erhebliche Vorteile. So ist kein Überstrom durch Stromregelung möglich und eine definierte Strombegrenzung bei Übertemperatur vorgesehen. Die Leuchtmittel 4 können eine konstante Helligkeit über einen weiten Spannungsbereich aufweisen, beispielsweise zwischen 9 Volt und 16 Volt. Der IC-Baustein 12 kann für drei oder auch vier LEDs verwendet werden, so daß die Lagerhaltung vereinfacht wird. Bei Verwendung dieses Bausteins sind kein PTC-Widerstand, keine Schutzdiode und auch kein externer Widerstand notwendig. Mit ihm ist eine leichte Dimmbarkeit der Leuchtmittel 4 möglich, so daß die Leuchtmittel 4 bei Nachtfahrten so geregelt werden, daß sie eine geringere Leuchtstärke haben als bei Tagfahrten`

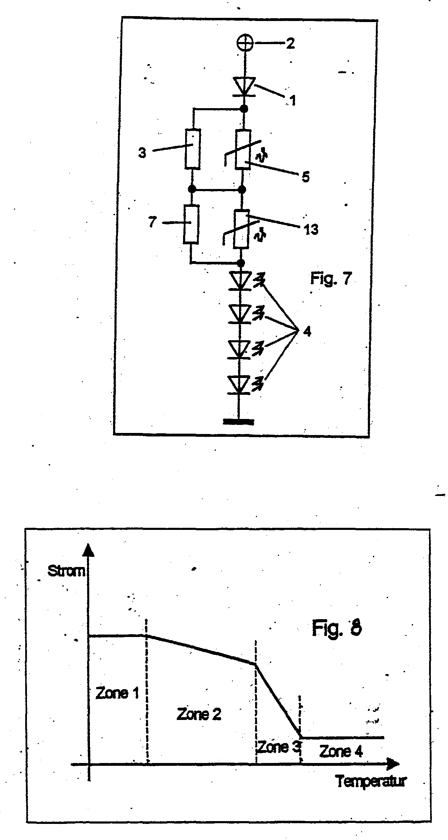

Das Ausführungsbeispiel nach Fig. 7 ähnelt der Ausführungsform gemäß Fig. 3. Dem PTC-Widerstand 5 ist ein weiterer PTC-Widerstand 13 nachgeschaltet, zu dem parallel ein Widerstand 7 liegt. Der PTC-Widerstand 13 hat eine zum PTC-Widerstand 5 unterschiedliche Ansprechtemperatur. Durch Zuschaltung dieses weiteren PTC-Widerstandes 13 parallel zum Widerstand 7 weist diese Schalteinrichtung nicht nur die Eigenschaften der Schalteinrichtung gemaß Fig. 3 auf, sondern darüber hinaus eine zusätzlich angepaßte Temperaturkennlinie in mehreren Segmenten. Der PTC-Widerstand 13 und der Widerstand 7 liegen jeweils in Serie zum PTC-Widerstand 5 und zum Widerstand 3. Dem PTC-Widerstand 13 sind die als LEDs ausgebildeten Leuchtmittel 4 nachgeordnet.

Fig. 8 zeigt beispielhaft eine Temperatur-Strom-Kennlinie der Schalteinrichtung gemäß Fig. 7. Je höher die Temperatur ist, desto geringer wird der Strom. Durch die beiden PTC-Widerstände 5, 13 mit unterschiedlichen Ansprechtemperaturen kann der Strom optimal an die herrschende Temperatur angepaßt werden. Bei Übertemperatur wird der Strom, wie Fig. 8 zeigt, auf ein für die Leuchtmittel 4 unschädliches Maß verringert.

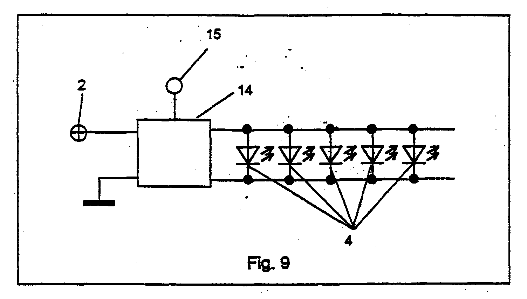

Fig. 9 zeigt eine Schalteinrichtung, bei der die am Versorgungsplus 2 anliegende Eingangsspannung über ein Schaltnetzteil 14 nach dem Prinzip eines Abwärtswandlers mit hohem Wirkungsgrad auf eine geregelte Spannung herabgesetzt wird, bei der durch die als LEDs aus-gebildeten Leuchtmittel 4 der gewünschte Strom fließt. Bis zur Leistungsgrenze des Schaltnetzteiles 14 können beliebig viele Leuchtmittel 4 parallel betrieben werden. Die Ausgangsspannung des Schaltnetzteiles kann über einen Referenzspannungseingang 15 den Erfordernissen angepaßt werden.

Im Schaltnetzteil 14 sorgen Schutzbeschaltungen für eine automatische Abschaltung bei Überlast und/oder Übertemperatur und/oder für eine Ausgangsspannungsreduzierung ab einer bestimmten Umgebungstemperatur, so daß die Leuchtmittel 4 geschützt sind. Das Schaltnetzteil 14 ist darüber hinaus so ausgebildet, daß es die Leuchtmittel 4 vor positiven und negativen Überspannungsimpulsen schützt.

## Patentansprüche

1. Schaltungseinrichtung zum Schutz von strombetriebenen Leuchtmitteln, insbesondere von LEDs, zu Signal- oder Beleuchtungszwecken,
dadurch gekennzeichnet, daß dem Leuchtmittel (4) wenigstens ein PTC-Widerstand (5, 13) vorgeschaltet ist.

2. Schaltungseinrichtung nach Anspruch 1,
dadurch gekennzeichnet, daß dem PTC-Widerstand (5) wenigstens eine Z-Diode (6) nachgeschaltet ist, die parallel zum Leuchtmittel (4) liegt.

3. Schaltungseinrichtung nach Anspruch 1 oder 2,
dadurch gekennzeichnet, daß in Reihe zum Leuchtmittel (4) wenigstens eine Diode (1) liegt, die dem PTC-Widerstand (5) nach-geschaltet ist.

4. Schaltungseinrichtung nach Anspruch 1 oder 3,
dadurch gekennzeichnet, daß dem PTC-Widerstand (5, 13) wenigstens eine Diode (1) vorgeschaltet ist, und daß vorzugsweise parallel zum PTC-Widerstand (5, 13) wenigstens ein Widerstand (3, 7) liegt.

5. Schaltungseinrichtung nach einem der Ansprüche 1, 3 und 4, dadurch gekennzeichnet, daß zwischen dem PTC-Widerstand (5) und dem Leuchtmittel (4) wenigstens ein weiterer Widerstand (7) liegt.

6. Schaltungseinrichtung nach Anspruch 4 oder 5, dadurch gekennzeichnet, daß zwei PTC-Widerstände (5, 13) hintereinander geschaltet sind, zu denen jeweils ein Widerstand (3, 7) parallel geschaltet ist.

7. Schaltungseinrichtung zum Schutz von strombetriebenen Leuchtmitteln, insbesondere von LEDs, zu Signal- oder Beleuchtungszwecken,
dadurch gekennzeichnet, daß dem Leuchtmittel (4) eine selbstregelnde Stromquelle (10) vorgeschaltet ist.

8. Schaltungseinrichtung nach Anspruch 7,
dadurch gekennzeichnet, daß die selbstregelnde Stromquelle (10) potentialfrei ist.

9. Schaltungseinrichtung nach Anspruch 7 oder 8,
dadurch gekennzeichnet, daß die selbstregelnde Stromquelle (10) wenigstens einen Feldeffekttransistor (8), vorzugsweise ein MOSFET, aufweist, und daß der Stromquelle (10) vorteilhaft eine Diode (1) vorgeschaltet ist.

10. Schaltungseinrichtung nach Anspruch 8 oder 9,
dadurch gekennzeichnet, daß die selbstregelnde Stromquelle (10) einen dem Feldeffekttransistor (8) nachgeschalteten Meßwiderstand (9) aufweist, und daß vorzugsweise parallel oder in Reihe zum Meßwiderstand (9) wenigstens ein PTC-Widerstand (5) vorgesehen ist.

11. Schaltungseinrichtung nach einem der Ansprüche 7 bis 10, dadurch gekennzeichnet, daß die selbstregelnde Stromquelle, der Meßwiderstand und der PTC-Widerstand Teil eines IC-Bausteins (12) sind, der vorzugsweise eine Temperaturkompensation und/oder eine thermisch abhängige Stromkennlinie und/oder eine externe Steuermöglichkeit des Nennstromes durch Steuerspannung oder -strom enthält.

12. Schaltungseinrichtung zum Schutz von strombetriebenen Leuchtmitteln, insbesondere von LEDs, zu Signal- oder Beleuchtungszwecken,
dadurch gekennzeichnet, daß dem Leuchtmittel (4) ein Abwärtswandler (14) vorgeschaltet ist.

13. Schaltungseinrichtung nach Anspruch 12,
dadurch gekennzeichnet, daß der Abwärtswandler (14) Schutzbeschaltungen für eine automatische Abschaltung bei Überlast und/oder Übertemperatur aufweist, und daß der Abwärtswandler (14) vorteilhaft eine Schutzbeschaltung für eine Ausgangsspannungsreduzierung ab einer bestimmten Umgebungstemperatur aufweist.

14. Schaltungseinrichtung nach Anspruch 12 oder 13,
dadurch gekennzeichnet, daß die Ausgangsspannung des Abwärtswandlers (14) über einen Referenzspannungseingang (15) anpaßbar ist.

15. Schaltungseinrichtung nach einem der Ansprüche 12 bis 14, dadurch gekennzeichnet, daß die Leuchtmittel (4) parallel zueinander liegen.
